# EUROPEAN PATENT APPLICATION

(11) **EP 3 413 208 A1**
(43) Date of publication of application: **12.12.2018**
(21) Application number: 18174655.3
(22) Date of filing: 28.05.2018
(51) Int. Cl.: G06F 17/27, G06F 17/24, G06F 21/60, G06F 21/83

(54) **GENERATING PREDICTIVE TEXTS ON AN ELECTRONIC DEVICE**

(30) Priority: 05.06.2017 US 201715614078
(71) Applicant: BlackBerry Limited, Waterloo, Ontario N2K 0A7 (CA)
(72) Inventor: ADAMS, Neil Patrick, Waterloo, Ontario N2K 0A7 (CA); CULLUM, Mark Alex, Ottawa, Ontario K1Y 3R4 (CA); HO, Colin Stephen Samuel, Kanata, Ontario K2K 2Z6 (CA)
(74) Representative: Hanna Moore + Curley

(57) **Abstract**

Systems, methods, and software can be used to generate predictive text on an electronic device. In some aspects, one computer-implemented method includes receiving, at an input method editor (IME) operating on an electronic device, a text prediction indicator for an editable field outputted by an application; determining, based on the text prediction indicator, whether a text input from the editable field is allowed to be stored; in response to determining that the text input from the editable field is allowed to be stored, storing the text input; determining a predictive text; and outputting the predictive text on the electronic device.

## Description

### TECHNICAL FIELD

The present disclosure relates to generating predictive texts.

### BACKGROUND

In some cases, electronic devices, including mobile devices or other computer systems, use an input method editor (IME) that performs text predictions for the electronic devices. The IME can receive inputs and stores the inputs in a dictionary. The IME can also generate predictive texts based on the stored inputs and output the predictive texts on the electronic device for word suggestions or auto-correction. For example, the predictive texts can be outputted by being displayed on a screen of the electronic device.

### SUMMARY

Accordingly there is provided a method, a computing device and a computer program as detailed in the claims that follow.

### DESCRIPTION OF DRAWINGS

FIG. 1 is a schematic diagram showing an electronic device that generates a predictive text, according to an implementation.
FIG. 2 is a flow diagram showing an example process for generating a predictive text, according to an implementation.
FIG. 3 illustrates an example user interface for text prediction, according to an implementation.

Like reference numbers and designations in the various drawings indicate like elements.

### DETAILED DESCRIPTION

In some cases, applications may access sensitive information. For purpose of security protection, text inputs from these applications may not be shared outside of the applications. However, because the text inputs from these applications are stored in the dictionary, these text inputs may be accessed by the IME and outputted to other applications, and thus the sensitive information may be accessed by the other applications.

Some applications can configure the types of the editable fields outputted by the applications as a password type. The IME would detect the type and determine that text prediction should be turned off for these fields. Accordingly, the IME would not store text inputs from these editable fields. This approach protects the sensitive information from leaking. On the other hand, these applications cannot take advantage of the text prediction features.

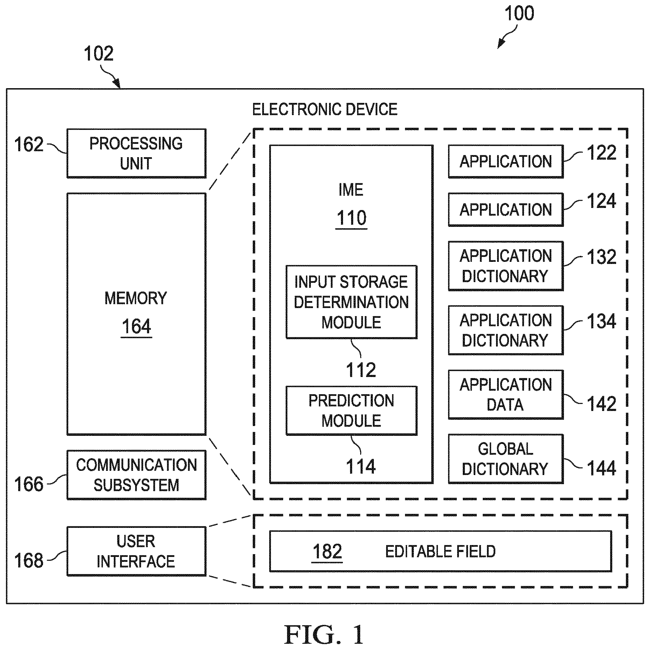

In some cases, a text prediction indicator can be associated with an editable field. The text prediction indicator can indicate the dictionary storage and access policy configured for the text inputs of the editable field. The dictionary storage and access policy can indicate that the text inputs can be shared with other applications for text prediction, or only used for text prediction of the particular application that output the editable field. An application-specific dictionary can be created to store text inputs for the particular application. The dictionary storage and access policy can also indicate other restrictions, e.g., document-specific or user-specific restrictions. Furthermore, for applications that restrict the storage of text inputs, stored texts of the global dictionary can still be used to provide text predictions. FIGS. 1-3 and associated descriptions provide additional details of these implementations. These approaches provide a flexible implementation for the application to configure specific dictionary storage and access policies that balance the security protections of information with the improved user experience of text prediction features.

FIG. 1 is a schematic diagram 100 showing an electronic device 102 that generates a predictive text, according to an implementation. The electronic device 102 includes a processing unit 162, a communication subsystem 166, a user interface 168, and memory 164. An electronic device may include additional, different, or fewer features, as appropriate.

The example processing unit 162 can include one or more processing components (alternatively referred to as "processors" or "central processing units" (CPUs)) configured to execute instructions related to one or more of the processes, steps, or actions described above, in connection with one or more of the implementations disclosed herein. In some implementations, the processing unit 162 can be configured to generate control information, such as a measurement report, or respond to received information, such as control information from a network node. The processing unit 162 can also include other auxiliary components, such as random access memory (RAM) and read-only memory (ROM).

The example communication subsystem 166 can be configured to provide wireless or wireline communication for data or control information provided by the processing unit 162. The communication subsystem 166 can include, for example, one or more antennas, a receiver, a transmitter, a local oscillator, a mixer, and a digital signal processing (DSP) unit. In some implementations, the communication subsystem 166 can support multiple input multiple output (MIMO) transmissions. In some implementations, the receivers in the communication subsystem 166 can be an advanced receiver or a baseline receiver. Two receivers can be implemented with identical, similar, or different receiver processing algorithms.

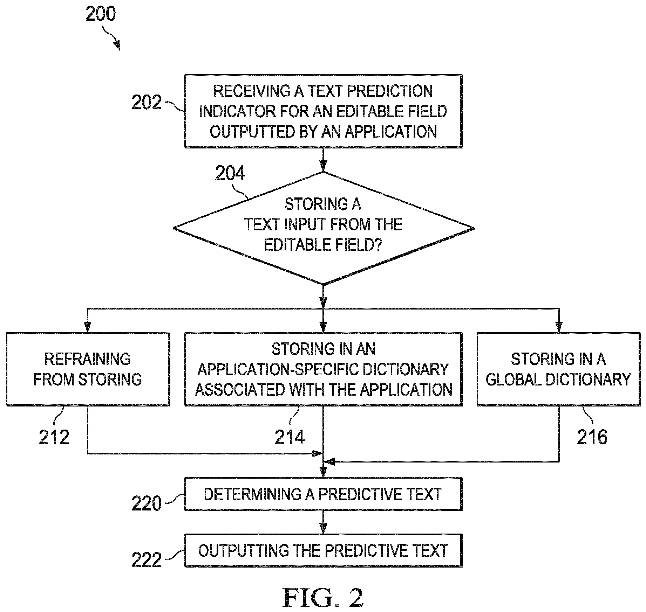

The example user interface 168 can include, for example, any of the following: one or more of a display or touch screen display (for example, a liquid crystal display (LCD), a light emitting diode (LED), an organic light emitting diode (OLED), or a micro-electromechanical system (MEMS) display), a keyboard or keypad, a trackball, a speaker, or a microphone. As shown in FIG. 1, the example user interface 168 can output an editable field 182. The editable field 182 is a user interface object that receives text inputs. The text inputs can be received from a physical or virtual keyboard, a touch screen, a voice recognition processor, or another user interface component. The editable field 182 can also output predictive texts. FIGS. 2 and associated descriptions provide additional details of these implementations. The user interface 168 can also include I/O interface, for example, a universal serial bus (USB) interface.

The example memory 164 can be a computer-readable storage medium on the electronic device 102. Examples of the memory 164 include volatile and non-volatile memory, magnetic media, optical media, random access memory (RAM), read-only memory (ROM), removable media, and others. The memory 164 can store an operating system (OS) of the electronic device 102 and various other computer-executable software programs for performing one or more of the processes, steps, or actions described above.

The memory 164 can store applications, data, operation system, and extensions for the electronic device 102. As illustrated, the memory 164 stores applications 122 and 124, application dictionaries 132 and 134, a global dictionary 144, data 142, and an IME 110.

Applications, e.g., the applications 122 and 124, can include programs, modules, scripts, processes, or other objects that can execute, change, delete, generate, or process application data. For example, applications can be implemented as Enterprise Java Beans (EJBs). Design-time components may have the ability to generate run-time implementations into different platforms, such as J2EE (Java 2 Platform, Enterprise Edition), ABAP (Advanced Business Application Programming) objects, ANDROID, iOS, or Microsoft's .NET. Further, while illustrated as internal to the electronic device 102, one or more processes associated with an application may be stored, referenced, or executed remotely. For example, a portion of an application may be an interface to a web service that is remotely executed. Moreover, an application may be a child or sub-module of another software module (not illustrated).

Data 142 can include various types of data, e.g., files, classes, frameworks, backup data, business objects, jobs, web pages, web page templates, database tables, repositories storing business or dynamic information, and other information including parameters, variables, algorithms, instructions, rules, constraints, or references thereto. The data 142 may include information that is associated with an application, a network, a user, and other information. For example, the data 142 may include data associated with application 122 and data associated with application 124. In some cases, data associated with different applications can be stored in different portions of the memory 164. For example, data associated with the application 122 may be stored in a trustzone. FIGS. 2 and associated descriptions provide additional details of these implementations.

Application dictionaries 132 and 134 are application-specific dictionaries that are associated with a respective application. The application dictionary 132 store text inputs from the editable fields that are outputted by application 122. The stored text inputs in the application dictionaries 132 can also be used for text prediction in the editable fields that are outputted by application 122. Similarly, the application dictionaries 134 stores text inputs from the editable fields that are outputted by application 124. The stored text inputs in the application dictionaries 134 can also be used for text prediction in the editable fields that are outputted by application 124. On the other hand, the stored text inputs in the application dictionaries 134 cannot be used for text prediction in the editable fields that are outputted by application 122, while the stored text inputs in the application dictionaries 132 can also be used for text prediction in the editable fields that are outputted by application 124. FIGS. 2-3 and associated descriptions provide additional details of these implementations.

The global dictionary 144 stores text inputs that can be used by applications 122 or 124, or any other application executed on the electronic device 102.

The IME 110 represent an application, set of applications, software, software modules, hardware, or any combinations thereof, that can be configured to receive text inputs and provide text predictions. The IME 110 can convert the input received from the editable field 182, e.g., keyboard strokes, touch interface gestures, or voice, into texts. In some cases, the IME 110 can also convert the inputs into a different language. The IME can be implemented as part of the operating system executed on the electronic device 102. Alternatively or in combination, the IME can be implemented or updated as a 3^{rd} party application or extension that is separated from the operating system. In some cases, the IME can be referred to as a text input processor (TIP).

The IME 110 includes an input storage determination module 112. The input storage determination module 112 represents an application, set of applications, software, software modules, hardware, or any combinations thereof, that can be configured to determine whether to store a text input received from an editable field into a dictionary. The input storage determination module 112 can identify a dictionary storage and access policy associated with an editable field based on a text prediction indicator associated with the editable field, and determine whether to store text inputs received from the editable field into the global dictionary 144, the application dictionary 132 or 134, or refrain from storing. FIGS. 2-3 and associated descriptions provide additional details of these implementations.

The IME 110 includes a prediction module 114. The prediction module 114 represent an application, set of applications, software, software modules, hardware, or any combinations thereof, that can be configured to generate a predictive text. The prediction module 114 can retrieve text inputs from the global dictionary 144, the application dictionary 132 or 134, or any combinations thereof and generate a predictive text based on the retrieved text inputs. FIGS. 2-3 and associated descriptions provide additional details of these implementations.

In one example operation, the IME 110 can receive a text prediction indicator for the editable field 182 outputted by the application 122. The IME 110 can determine, based on the text prediction indicator, that a text input from the editable field 182 is allowed to be stored in the application dictionary 132. In response, the IME 110 stores the text input in the application dictionary 132. The IME 110 uses the stored text inputs in the global dictionary 144 and the application dictionary 132 to determine a predictive text. The IME 110 outputs the predictive text in the editable field 182 on the electronic device. FIGS. 2-3 and associated descriptions provide additional details of these implementations and other example operations.

Turning to a general description, an electronic device, e.g., the electronic device 102, may include, without limitation, any of the following: computing device, mobile device, mobile electronic device, user device, endpoint, Internet of Things (IoT) device, Enterprise of Things (EoT) device, mobile station, subscriber station, portable electronic device, mobile communications device, wireless modem, wireless terminal, television, printer or other peripheral, vehicle, or any other electronic device capable of sending and receiving data. Examples of a mobile device may include, without limitation, a cellular phone, personal data assistant (PDA), smart phone, laptop, tablet, personal computer (PC), pager, portable computer, portable gaming device, wearable electronic device, health/medical/fitness device, camera, or other mobile communications devices having components for communicating voice or data via a wireless communication network. The wireless communication network may include a wireless link over at least one of a licensed spectrum and an unlicensed spectrum. The term "mobile device" can also refer to any hardware or software component that can terminate a communication session for a user. In addition, the terms "user equipment," "UE," "user equipment device," "user agent," "UA," "user device," and "mobile device" can be used synonymously herein.

While elements of FIG. 1 are shown as including various component parts, portions, or modules that implement the various features and functionality, nevertheless, these elements may instead include a number of sub-modules, third-party services, components, libraries, and such, as appropriate. Furthermore, the features and functionality of various components can be combined into fewer components, as appropriate.

FIG. 2 is a flow diagram showing an example process 200 for generating a predictive text, according to an implementation. The process 200 can be implemented by an electronic device, e.g., the electronic device 102 shown in FIG. 1. The process 200 shown in FIG. 2 can also be implemented using additional, fewer, or different entities. Furthermore, the process 200 shown in FIG. 2 can be implemented using additional, fewer, or different operations, which can be performed in the order shown or in a different order. In some instances, an operation or a group of the operations can be iterated or repeated, for example, for a specified number of iterations or until a terminating condition is reached.

At 202, a text prediction indicator for an editable field is received at an input method editor (IME) operating on an electronic device. The editable field is outputted by an application. In some cases, the application is operating on the electronic device. For example, the application can be an email application, a messaging application, a contact editing application, or any other applications that operate on the electronic devices. Alternatively or in combination, the application can operate in a different device that is communicatively coupled with the electronic devices, e.g., over a wireless or wireline connection. The editable field can be a subject field, a phone number field, an address field, a message body field, or any other field that is outputted on the electronic device for receiving user input. In some cases, a user can provide input into the editable field by typing on a physical or a virtual keyboard. Alternatively or in combination, the user can provide input into the editable field using touch, swap, gesture, voice, or any other user interface input methods.

At 204, the IME determines whether text inputs from the editable fields are allowed to be stored based on the text prediction indicator. The text prediction indicator indicates whether text inputs into the editable field are to be stored in a dictionary. For example, the text prediction indicator can be set to a value representing "do not use the text inputs from this field for text prediction." This value instructs the IME not to store text inputs from the editable field. The application can configure the text prediction indicator to this value to protect the sensitive fields. By instructing the IME not to store text inputs from these fields, the risks of leaking information associated with these fields can be greatly reduced.

In another example, the application can configure the text prediction indicator to a value representing "use the text inputs from this field for text prediction." This value instructs the IME to store text inputs from the editable field. This approach enables the IME to retrieve the text inputs from the editable field and provide text prediction based on these text inputs. These additional inputs enhance the vocabulary of the dictionary used for text prediction, and thus improve the accuracy of the text prediction and provide a better user experience. In some cases, the IME can store the text inputs from this field in a global dictionary that is accessible when text is predicted for other applications.

In yet another example, the application can configure the text prediction indicator to a value representing "use the text inputs from this field only for text prediction of this application." This value instructs the IME to store the text inputs, but not in a global dictionary that is accessible to other applications. Instead, the IME can store the text inputs in a dictionary specifically associated with the application. These text inputs can be retrieved and used for text prediction of the application, but not for other applications. This approach provides a more accurate text prediction for a particular application, while preventing information leak to other applications.

In some cases, more than one application may be grouped into an application group, and the text prediction indicator can be configured to a value representing "use the text inputs from this field only for text prediction of the applications in this application group." This value instructs the IME to store the text inputs in a dictionary that is associated with the application group. These text inputs can be retrieved and used for text prediction of applications in the application group. In one example, applications bearing the same application signature, e.g., applications from the same vendor, can form an application group and share a dictionary for text prediction.

In yet another example, the application can configure the text prediction indicator to a value representing "use the text inputs from this field only for this document." This value instructs the IME to store the text inputs in a dictionary that is associated with the particular document of the editable field. For example, the document can be a long email, and the editable field can be the message body of the email. In this example, the text inputs can be stored in a dictionary that is specific for this email. When the user continues to edit this email, the text inputs received from the message body of this email can be used for text prediction. But the text inputs are not accessible for text prediction when another email is edited. Other examples of the document include a word document, a message, a spreadsheet, a note page, and the like.

Alternatively or additionally, the application can configure the text prediction indicator to indicate that the text inputs from the editable field can be used for text predictions of the user providing the text inputs, or a group of users that includes the user providing the text inputs. Moreover, the application can configure the text prediction indicator to indicate that text inputs from the editable field can be used for text predictions within a time period, within an area where the electronic device is located, or a combination thereof. In some cases, the text prediction indicator can include multiple values that represent a combination of dictionary storage and access policies described previously for the editable field.

In some cases, the application can configure the text prediction indicator to different values for different editable fields to provide different levels of security protections for these fields. Alternatively or additionally, the application can configure the text prediction indicator to the same value for all editable fields of the application. The value can be specified in the application manifest of the application. The value can thus be associated to all editable fields of the application. This approach can reduce complexity of developing the application.

From 204, the process 200 proceeds to 212, 214, or 216, respectively based on the text prediction indicator. As discussed above, if the text prediction indicator is set to "do not use the text inputs from this field for text prediction," the process 200 proceeds to 212, where the IME refrains from storing text inputs from the editable field in a dictionary.

If the text prediction indicator is set to "use the text inputs from this field only for text prediction of this application," the process 200 proceeds to 214, where the IME stores the text inputs from the editable field into an application-specific dictionary that is associated with the application. In some cases, the IME also receives an application identifier that identifies the application that outputs the editable field. The IME can use the application identifier to determine which application-specific dictionary that the IME can use to store the text inputs. In some cases, if IME does not find an application-specific dictionary for this application, the IME can create an application-specific dictionary for this application.

As discussed previously, in some cases, the text prediction indicator can indicate that the text inputs from the editable field can be used for text predictions based on an application group, a document, a user, a user group, within a time period, within a location area, or any combinations of access policies. In these or other cases, the IME can also receive an indicator indicating the application group, the document, the user, the user group, the time, the location, or any combinations thereof associated with the text inputs of the editable field. The IME can create and search the specific dictionary based on these dictionary storage and access policies and store the text inputs in the specific dictionary.

In some cases, text inputs for one or more specific dictionaries, e.g., application-specific dictionaries can be stored by the IME. In one example, the IME can partition a dictionary space into a global dictionary and one or more application-specific dictionaries. During the text prediction, the IME can retrieve texts from the one or more dictionaries based on the identity of the application and the access policies.

Alternatively, text inputs for one or more specific dictionaries, e.g., application-specific dictionaries or document-specific dictionaries, can be stored by the application. In some cases, an application may have access to a storage having an increased level of security protection. For example, the application can store the application-specific dictionary in an encrypted storage. In some cases, the storage may be part of a trustzone (TZ). A TZ generally comprises a secure execution space that is configured to isolate an operating environment from the generating operating system of the electronic device. The TZ can include a set of security extensions that can be used to execute security operations such as encryption and decryption. In some cases, the TZ is implemented using hardware processors configured to perform these security operations to provide additional security. By storing the application-specific dictionary using the TZ, the application can provide additional security protection to the information in the application-specific dictionary. In some cases, the IME can invoke an API to pass the text inputs to the application to store in the application-specific dictionary. The IME can also invoke an API to retrieve text inputs from the application-specific dictionary for text prediction.

In some cases, the IME, the application, or a combination thereof can also delete a specific dictionary based on the dictionary storage and access policies discussed previously. For example, the IME or the application can delete a time-specific dictionary if the configured access period has lapsed. The IME or the application can also delete an application-specific dictionary or a document-specific dictionary if the application or the document associated with the respective library is deleted.

If the text prediction indicator is set to "use the text inputs from this field for text prediction," the process 200 proceeds to 216, where the IME stores the text inputs from the editable field into a global dictionary. The global dictionary is accessible to other applications for text prediction.

The process 200 proceeds from 212, 214, and 216, respectively to 220, where a predictive text is determined. At 222, the predictive text is outputted on the electronic device. During a text prediction operation, the IME access the dictionary to retrieve stored texts and generate a predicative text based on the stored texts in the dictionary using a text prediction algorithm. Examples of the text prediction algorithm include n-gram usage and "continuous space." The algorithm can also take factors such as frequency, recency, and frecency into consideration.

The IME can determine from which dictionary to retrieve stored text based on the accessible policies described previously. For example, for text prediction of an editable field outputs by a particular application, the IME can retrieve stored text in a global dictionary and the application-specific library associated with a particular application. The IME can also retrieve stored text in a global dictionary and other specific dictionaries, e.g., document-specific dictionary, application group-specific dictionary, user-specific dictionary, location-specific dictionary, time-specific dictionary, or any other dictionaries based on the dictionary storage and access policies discussed previously.

In some cases, an editable field can be configured not to perform text prediction. In these or other cases, IME refrains from accessing a dictionary and generating a predictive text. In other cases, while an editable field may be associated with a text prediction indicator indicating that text inputs from the editable field is not used for text prediction, the IME can still provide a predictive text based on stored texts in the global dictionary.

In some cases, whether text inputs from an editable field outputted by an application is stored in an application-specific dictionary or a global dictionary can be configured. In one implementation, a user can configure application-specific dictionary for each of one or more applications. For example, the user can configure an email-specific dictionary for the email application. In this example, the text inputs from the editable field outputted by the email application can be stored in the email-specific dictionary and will not be retrieved by the IME for text predictions for the other applications. In some cases, the user, the operating system, the application, or any combinations thereof can configure a default preference for an application. The default preference can be using an application-specific dictionary, or share with other applications, and the default preference can be overwritten by the user, the operating system, the application, or any combinations thereof. Moreover, the preference can also be configured based on a user-specific, a document-specific, an application group-specific, or any other dictionary storage and access policy discussed previously. In some cases, the preference can be implemented using the text prediction indicator associated with the editable field as described previously. Alternatively, or in combination, the preference can be implemented using other identifiers. In these or other cases, the IME can receive the text prediction indicator, the preference identifier, or a combination thereof to determine whether to store the text inputs and the particular dictionary used to store the text inputs for a particular application.

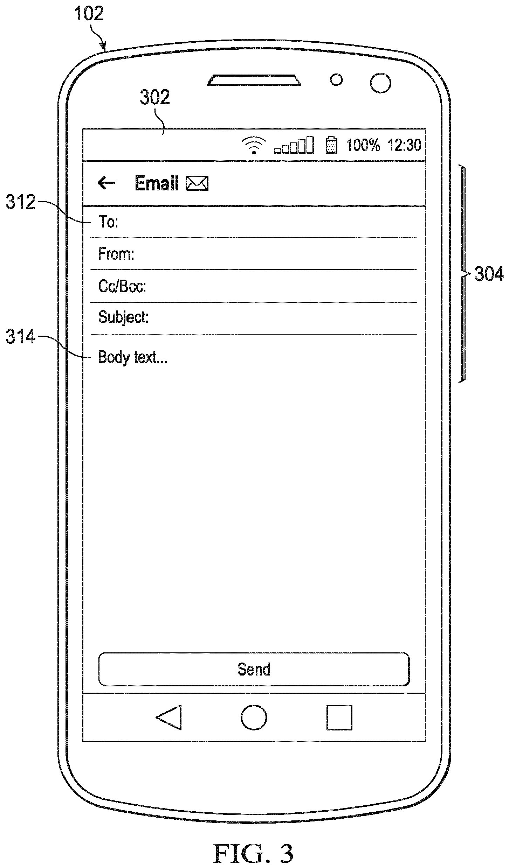

FIG. 3 illustrates an example user interface for text prediction, according to an implementation. In the illustrated example, an email application is executing on the electronic device 102. As illustrated, an example user interface 304 of the email application is displayed on a screen 302 of the electronic device 102. The example user interface 304 includes editable fields 312 and 314 that are outputted by the email application. In the illustrated example, the editable field 312 is used for entering the name or address information of the receiver. The editable field 314 is used for entering the body of the email. In one example, the text prediction indicator for the editable field 312 is set to a value indicating "use the text inputs from this field only for text prediction of this application." In this example, the text inputted into the editable field 312 is stored in a dictionary that is specific to the email application. The stored text input in this application-specific dictionary can be used for text prediction of the email application. For example, the stored text input in this application-specific dictionary can be used for predicting text when the user enters text in the editable field 314. In another example, the text prediction indicator for the editable field 312 can be set to a value indicating "use the text inputs from this field for text prediction," and the text input received in editable field 312 can be stored in a global dictionary and used for text prediction for the email application and other applications executing on the electronic device 102. In yet other example, the text prediction indicator for the editable field 312 can be set to a value indicating "do not use the text inputs from this field for text prediction," and the text input received in editable field 312 is not allowed to be stored. Other editable fields, e.g., "From," "CC/BCC," or "Subject," can also be associated with the same or different text prediction indicators.

Some of the subject matter and operations described in this disclosure can be implemented in digital electronic circuitry, or in computer software, firmware, or hardware, including the structures described in this disclosure and their structural equivalents, or in combinations of one or more of them. Some of the subject matter described in this disclosure can be implemented as one or more computer programs, i.e., one or more modules of computer program instructions, encoded on a computer storage medium for execution by, or to control the operation of, data-processing apparatus. Alternatively or in addition, the program instructions can be encoded on an artificially generated propagated signal, for example, a machine-generated electrical, optical, or electromagnetic signal that is generated to encode information for transmission to suitable receiver apparatus for execution by a data processing apparatus. The computer-storage medium can be a machine-readable storage device, a machine-readable storage substrate, a random or serial access memory device, or any combinations of computer-storage mediums.

The terms "data-processing apparatus," "computer," or "electronic computer device" encompass all kinds of apparatus, devices, and machines for processing data, including, by way of example, a programmable processor, a computer, a system on a chip, or multiple ones, or combinations of the foregoing. The apparatus can include special purpose logic circuitry, e.g., an FPGA (field programmable gate array) or an ASIC (application specific integrated circuit). In some implementations, the data processing apparatus or special purpose logic circuitry (or a combination of the data processing apparatus or special purpose logic circuitry) may be hardware- or software-based (or a combination of both hardware- and software-based). The apparatus can optionally include code that creates an execution environment for computer programs, for example, code that constitutes processor firmware, a protocol stack, a database management system, an operating system, or a combination of execution environments. The present disclosure contemplates the use of data processing apparatuses with or without conventional operating systems, for example LINUX, UNIX, WINDOWS, MAC OS, ANDROID, IOS, or any other suitable, conventional operating system.

A computer program, which may also be referred to, or described, as a program, software, a software application, a module, a software module, a script, or code, can be written in any form of programming language, including compiled or interpreted languages, or declarative or procedural languages, and it can be deployed in any form, including as a stand-alone program or as a module, component, subroutine, or other unit suitable for use in a computing environment. A computer program may, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site, or distributed across multiple sites and interconnected by a communication network. While portions of the programs illustrated in the various figures are shown as individual modules that implement the various features and functionality through various objects, methods, or other processes, the programs may instead include a number of sub-modules, third-party services, components, libraries, and such, as appropriate. Conversely, the features and functionality of various components can be combined into single components, as appropriate.

Some of the processes and logic flows described in this disclosure can be performed by one or more programmable processors, executing one or more computer programs to perform actions by operating on input data and generating output. The processes and logic flows can also be performed by, and apparatus can also be implemented as, special purpose logic circuitry, e.g., an FPGA (field programmable gate array) or an ASIC (application specific integrated circuit).

Processors suitable for the execution of a computer program include, by way of example, both general and special purpose microprocessors, and processors of any kind of digital computer. Generally, a processor will receive instructions and data from a read-only memory or a random-access memory, or both. A processor can include by way of example a programmable processor, a computer, a system on a chip, or multiple ones, or combinations of the foregoing. A processor can include special purpose logic circuitry, e.g., an FPGA (field programmable gate array) or an ASIC (application specific integrated circuit).

Computers suitable for the execution of a computer program can be based on general or special purpose microprocessors, both, or any other kind of CPU. Generally, a CPU will receive instructions and data from a read-only memory (ROM) or a random access memory (RAM), or both. The essential elements of a computer are a CPU, for performing or executing instructions, and one or more memory devices, for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable storage device, for example, a universal serial bus (USB) flash drive, to name just a few.

Computer-readable media (transitory or non-transitory, as appropriate) suitable for storing computer program instructions and data include all forms of non-volatile memory, media and memory devices, including, by way of example, semiconductor memory devices, for example, erasable programmable read-only memory (EPROM), electrically erasable programmable read-only memory (EEPROM), and flash memory devices; magnetic disks, for example, internal hard disks or removable disks; magneto-optical disks; and CD-ROM, DVD+/-R, DVD-RAM, and DVD-ROM disks. The memory may store various objects or data, including caches, classes, frameworks, applications, backup data, jobs, web pages, web page templates, database tables, repositories storing dynamic information, and any other appropriate information including any parameters, variables, algorithms, instructions, rules, constraints, or references thereto. Additionally, the memory may include any other appropriate data, such as logs, policies, security or access data, reporting files, as well as others. The processor and the memory can be supplemented by, or incorporated in, special purpose logic circuitry. In some cases, the computer storage medium can be transitory, non-transitory, or a combination thereof.

To provide for interaction with a user, implementations of the subject matter described in this disclosure can be implemented on a computer having a display device, for example, a CRT (cathode ray tube), LCD (liquid crystal display), LED (Light Emitting Diode), or plasma monitor, for displaying information to the user and a keyboard and a pointing device, for example, a mouse, trackball, or trackpad by which the user can provide input to the computer. Input may also be provided to the computer using a touchscreen, such as a tablet computer surface with pressure sensitivity, a multi-touch screen using capacitive or electric sensing, or other type of touchscreen. Other kinds of devices can be used to provide for interaction with a user as well; for example, feedback provided to the user can be any form of sensory feedback, for example, visual feedback, auditory feedback, or tactile feedback; and input from the user can be received in any form, including acoustic, speech, or tactile input. In addition, a computer can interact with a user by sending documents to, and receiving documents from a device that is used by the user, for example, by sending web pages to a web browser on a user's client device in response to requests received from the web browser.

The term "graphical user interface," or "GUI," may be used in the singular or the plural to describe one or more graphical user interfaces and each of the displays of a particular graphical user interface. Therefore, a GUI may represent any graphical user interface, including but not limited to, a web browser, a touch screen, or a command line interface (CLI) that processes information and efficiently presents the information results to the user. In general, a GUI may include a plurality of user interface (UI) elements, some or all associated with a web browser, such as interactive fields, pull-down lists, and buttons operable by the business suite user. These and other UI elements may be related to or represent the functions of the web browser.

Implementations of the subject matter described in this disclosure can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this disclosure, or any combination of one or more such back-end, middleware, or front-end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11 a/b/g/n or 802.20 (or a combination of 802.11x and 802.20 or other protocols consistent with this disclosure), all or a portion of the Internet, or any other communication system, or systems at one or more locations (or a combination of communication networks). The network may communicate with, for example, Internet Protocol (IP) packets, Frame Relay frames, Asynchronous Transfer Mode (ATM) cells, voice, video, data, or other suitable information (or a combination of communication types) between network addresses.

The computing system can include clients and servers. A client and server are generally remote from each other and typically interact through a communication network. The relationship of client and server arises by virtue of computer programs running on the respective computers and having a client-server relationship to each other.

In some implementations, any or all of the components of the computing system, either hardware or software (or a combination of hardware and software), may interface with each other, or the interface using an application programming interface (API), or a service layer (or a combination of API and service layer). The API may include specifications for routines, data structures, and object classes. The API may be either computer language, independent or dependent, and refer to a complete interface, a single function, or even a set of APIs. The service layer provides software services to the computing system. The functionality of the various components of the computing system may be accessible for all service consumers using this service layer. Software services provide reusable, defined business functionalities through a defined interface. For example, the interface may be software written in JAVA, C++, or other suitable language providing data in extensible markup language (XML) format or other suitable format. The API or service layer (or a combination of the API and the service layer) may be an integral or a stand-alone component in relation to other components of the computing system. Moreover, any or all parts of the service layer may be implemented as child or sub-modules of another software module, enterprise application, or hardware module without departing from the scope of this disclosure.

While this disclosure contains many specific implementation details, these should not be construed as limitations on the scope of any invention or on the scope of what may be claimed, but rather as descriptions of features that may be specific to particular implementations of particular inventions. Certain features that are described in this disclosure in the context of separate implementations can also be implemented, in combination, in a single implementation. Conversely, various features that are described in the context of a single implementation can also be implemented in multiple implementations, separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations may be considered optional), to achieve desirable results. In certain circumstances, multitasking or parallel processing (or a combination of multitasking and parallel processing) may be advantageous and performed as deemed appropriate.

Moreover, the separation or integration of various system modules and components in the implementations described above should not be understood as requiring such separation or integration in all implementations, and it should be understood that the described program components and systems can, generally, be integrated together in a single software product or packaged into multiple software products.

Accordingly, the above description of example implementations does not define or constrain this disclosure. Other changes, substitutions, and alterations are also possible without departing from the spirit and scope of this disclosure.

Furthermore, any claimed implementation below is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the computer-readable medium.

## Claims

1. A method, comprising:
receiving, at an input method editor, IME, operating on an electronic device, a text prediction indicator for an editable field outputted by an application;
determining, based on the text prediction indicator, whether a text input from the editable field is allowed to be stored;
in response to determining that the text input from the editable field is allowed to be stored, storing the text input;
determining a predictive text; and
outputting the predictive text on the electronic device.

2. The method of claim 1, further comprising:
receiving, at the input method editor, IME, a second text prediction indicator for a second editable field outputted by a second application;
determining, based on the second text prediction indicator, that a second text input from the second editable field is not allowed to be stored;
in response to determining that the second text input from the second editable field is not allowed to be stored, refraining from storing the second text input;
determining a second predictive text; and
outputting the second predictive text on the electronic device.

3. The method of claim 1 or 2, wherein the text prediction indicator is specified in an application manifest associated with the application.

4. The method of any preceding claim, wherein the text input is stored in an application-specific dictionary associated with the application, and determining that the text input from the editable field is allowed to be stored comprises:
receiving an application identifier of the application; and
determining, based on the application identifier and the text prediction indicator, that the text input from the editable field is allowed to be stored in the application-specific dictionary associated with the application.

5. The method of claim 4, wherein the application-specific dictionary is stored by the IME.

6. The method of claim 4, wherein the application-specific dictionary is stored by the application.

7. The method of any one of claims 4 to 6, wherein the predictive text is determined based on the application-specific dictionary associated with the application and a global dictionary.

8. An electronic device, comprising:
at least one hardware processor;
a computer-readable storage medium coupled to the at least one hardware processor and storing programming instructions for execution by the at least one hardware processor, wherein the programming instructions, when executed, cause the at least one hardware processor to perform operations comprising:
receiving, at an input method editor, IME, operating on the electronic device, a text prediction indicator for an editable field outputted by an application;
determining, based on the text prediction indicator, whether a text input from the editable field is allowed to be stored;
in response to determining that the text input from the editable field is allowed to be stored, storing the text input;
determining a predictive text; and
outputting the predictive text on the electronic device.

9. The electronic device of claim 8, the operations further comprising:
receiving, at the input method editor, IME, a second text prediction indicator for a second editable field outputted by a second application;
determining, based on the second text prediction indicator, that a second text input from the second editable field is not allowed to be stored;
in response to determining that the second text input from the second editable field is not allowed to be stored, refraining from storing the second text input;
determining a second predictive text; and
outputting the second predictive text on the electronic device.

10. The electronic device of claim 8 or 9, wherein the text prediction indicator is specified in an application manifest associated with the application.

11. The electronic device of any one of claims 8 to 10, wherein the text input is stored in an application-specific dictionary associated with the application, and determining that the text input from the editable field is allowed to be stored comprises:
receiving an application identifier of the application; and
determining, based on the application identifier and the text prediction indicator, that the text input from the editable field is allowed to be stored in the application-specific dictionary associated with the application.

12. The electronic device of claim 11, wherein the application-specific dictionary is stored by the IME.

13. The electronic device of claim 11, wherein the application-specific dictionary is stored by the application.

14. The electronic device of any one of claims 11 to 13, wherein the predictive text is determined based on the application-specific dictionary associated with the application and a global dictionary.

15. A computer program containing instructions which, when executed, cause an electronic device to perform the method of any one of claims 1 to 7.
